# EUROPEAN PATENT APPLICATION

(11) **EP 4 173 691 A1**
(43) Date of publication of application: **03.05.2023**
(21) Application number: 21833034.8
(22) Date of filing: 29.06.2021
(51) Int. Cl.: B01D 53/14, A23L 3/3436, B01J 20/02, B01J 20/30, B65D 81/26

(54) **OXYGEN SCAVENGER COMPOSITION AND METHOD FOR PRODUCING SAME**

(30) Priority: 30.06.2020 JP 2020112863
(71) Applicant: MITSUBISHI GAS CHEMICAL COMPANY, INC., Chiyoda-ku Tokyo 100-8324 (JP)
(72) Inventor: SATO, Daiki, Tokyo 125-8601 (JP); KAJI, Natsuko, Tokyo 125-8601 (JP); SASAKI, Kazuhisa, Tokyo 125-8601 (JP); NORO, Kensuke, Tokyo 125-8601 (JP); KAGIMOTO, Kouta, Tokyo 125-8601 (JP)
(74) Representative: Hoffmann Eitle
(86) International application number: PCT/JP2021/024613
(87) International publication number: WO 2022/004740

(57) **Abstract**

An oxygen scavenger composition contains a mixed granule of a composition containing a water retention agent, a swelling agent, a metal halide, water, an iron and an alkaline substance, wherein the alkaline substance contains at least one selected from the group consisting of hydroxides of alkali metals, hydroxides of alkaline earth metals and salts composed of a weak acid and a strong base.

## Description

### Technical Field

The present invention relates to an oxygen scavenger composition and a method for producing the same, particularly to an iron-based oxygen scavenger composition and a method for producing the same.

### Background Art

A method of using an oxygen scavenger is known as a storage technique for food products, pharmaceutical products, and the like. In this method, an article to be stored and the oxygen scavenger are enclosed and hermetically sealed in a sealed container having a gas-barrier property, whereby oxygen in the sealed container is absorbed by the oxygen scavenger composition and the atmosphere in the sealed container can be kept substantially in an oxygen-free state. As the function of the oxygen scavenger, the oxygen scavenger needs to be small in size and can absorb much oxygen. In other words, there is required an oxygen scavenger composition capable of a large amount of oxygen absorption per unit volume.

Typical oxygen scavengers include iron-based oxygen scavengers containing iron (iron powder) as their main agent and non-iron-based oxygen scavengers containing ascorbic acid, glycerol or the like as their main agent. Oxygen scavengers are suitably selected according to applications, but iron-based oxygen scavengers, from the viewpoint of the oxygen absorption performance, are broadly used.

The iron powder needs moisture for absorbing oxygen. Conventional oxygen scavengers containing iron powder and water contain the iron powder and a water retention agent retaining water to supply moisture as separable different powdery/granular materials. Hence, gaps are generated among powdery/granular materials of the iron powder and the water retention agent, and the gaps cause reduction in the amount of oxygen absorption per unit volume of oxygen scavenger compositions. Further, the iron powder and the water retention agent are aggregated and bonded readily with the iron powder each other or the water retention agent each other, and easily formed into a mass. When the iron powder forms a mass, the iron powder has a reduced surface area capable of being oxidized, and therefore there arises a problem of reduction of the amount of oxygen absorption as compared with the case where the iron powder and the water retention agent are homogeneously dispersed and mixed together.

For example, PTL1 discloses an oxygen scavenger composition which contains an oxygen absorbing substance, water and a swelling agent, and pressure-molded into a solid form to eliminate gaps between powdery/granular material, thereby achieving a reduced volume and a compact size. However, since the oxygen scavenger composition as described in PTL1, as compared with an oxygen scavenger composition which can be produced only by mixing, comes to anew need a process of pressure-molding, the production cost increases. Further since the iron powder present in the more inner portion of the powdery/granular material is more hardly oxidized, there is room for improvement in the amount of oxygen absorption per unit volume.

PTL2 discloses, for the purpose of providing an oxygen scavenger composition which solves the problem with the oxygen scavenger composition of PTL1 and is excellent in the amount of oxygen absorption per unit volume, an oxygen scavenger composition containing a powdery/granular material having an α layer containing a water retention agent, a swelling agent, a metal salt and water, a β layer containing iron, and a γ layer containing a porous carrier, wherein the powdery/granular material forms a layer structure in the order of the α, β and γ layers from the inside to the outside of the powdery/granular material.

### Citation List

### Patent Literature

PTL1: International Publication No. WO2007/046449
PTL2: International Publication No. WO2017/169015

### Summary of Invention

### Technical Problem

From the viewpoint of preventing oxidation of an article to be stored in a sealed container, it is preferable that an oxygen scavenger absorbs oxygen in an amount as large as possible. Use of large amounts of an iron powder and water in order to increase the amount of oxygen absorption, however, increases the amount of hydrogen generation along with the reaction during the oxygen absorption, which causes deformation and rupture of the container. Hence, there is demanded an oxygen scavenger which absorbs a large amount of oxygen while suppressing the amount of hydrogen generation.

The oxygen scavenger of PTL2 needs to undergo a production process in which an aqueous solution of a metal halide salt is charged in a water retention agent and a swelling agent under mixing to prepare a powdery/granular material being a starting material of the α layer, and thereafter, an iron powder is charged to the powdery/granular material and deposited on the outer side of the α layer to prepare an (α layer/β layer) powdery/granular material; so, there is demanded a method for producing an oxygen scavenger more efficiently.

Therefore, a problem to be solved by the present invention is to provide an oxygen scavenger composition excellent in the oxygen absorption performance and little in hydrogen generation during the oxygen absorption. Further, another problem to be solved by the present invention is to provide a method for efficiently producing an oxygen scavenger composition excellent in the oxygen absorption performance and little in hydrogen generation during the oxygen absorption.

### Solution to Problem

The present invention relates to the following oxygen scavenger composition and the following method for producing the same.
<1> An oxygen scavenger composition containing a mixed granule of a composition containing a water retention agent, a swelling agent, a metal halide, water, an iron and an alkaline substance, wherein the alkaline substance contains at least one selected from the group consisting of hydroxides of alkali metals, hydroxides of alkaline earth metals and salts composed of a weak acid and a strong base.
<2> The oxygen scavenger composition according to the above <1>, wherein a content of the alkaline substance is 0.2 to 10 parts by mass with respect to 100 parts by mass of the iron.
<3> The oxygen scavenger composition according to the above <1> or <2>, wherein a solubility of the alkaline substance in water at 25°C is 0.1 to 60% by mass.
<4> The oxygen scavenger composition according to any one of the above <1> to <3>, wherein the alkaline substance contains at least one selected from the group consisting of hydroxides of alkali metals and hydroxides of alkaline earth metals.
<5> The oxygen scavenger composition according to any one of the above <1> to <4>, wherein the alkaline substance contains calcium hydroxide.
<6> The oxygen scavenger composition according to any one of the above <1> to <5>, which has a layer containing a porous particle on an outside of the mixed granule.
<7> The oxygen scavenger composition according to any one of the above <1> to <6>, wherein the water retention agent contains at least one selected from the group consisting of diatomaceous earth, silica and activated carbon.
<8> The oxygen scavenger composition according to any one of the above <1> to <7>, wherein the swelling agent contains at least one selected from the group consisting of carboxymethylcellulose calcium, carboxymethylcellulose sodium, calcium bentonite and sodium bentonite.
<9> The oxygen scavenger composition according to any one of the above <1> to <8>, wherein the mixed granule is not a pressure-molded product.
<10> The oxygen scavenger composition according to any one of the above <1> to <9>, wherein the iron is dispersed throughout the entire mixed granule.
<11> A method for producing an oxygen scavenger composition according to any one of the above <1> to <10>, the method including a step of collectively mixing a water retention agent, a swelling agent, a metal halide, water, an iron and an alkaline substance for granulation.
<12> An oxygen scavenger package containing an oxygen scavenger composition according to any one of the above <1> to <10> and an air-permeable packaging material accommodating the oxygen scavenger composition.

### Advantageous Effects of Invention

The oxygen scavenger composition of the present invention is excellent in the oxygen absorption performance and little in hydrogen generation during oxygen absorption, and can absorb oxygen in a sealed container, without causing deformation or rupture of the container. Further, the production method of the present invention can efficiently produce an oxygen scavenger composition which is excellent in the oxygen absorption performance and little in hydrogen generation during oxygen absorption, and can absorb oxygen in a sealed container, without causing deformation or rupture of the container.

### Brief Description of Drawings

[Fig. 1]Fig. 1 is a cross-sectional photograph of an (α layer/β layer) powdery/granular material fabricated by a method described in Example 1 of PTL2.
[Fig. 2]Fig. 2 is a cross-sectional photograph of a mixed granule fabricated in Example 1 described later.

### Description of Embodiment

Hereinafter, one embodiment of the present invention will be described. The content of the present invention is not limited to the embodiment described hereinafter.

Here, in the present description, the term, "A to B", related to numerical values means "A or more and B or less" (in the case of A < B) or "A or less and B or more" (in the case of A > B). Further in the present invention, combinations of preferable aspects are more preferable aspects.

### [Oxygen scavenger composition]

The oxygen scavenger composition of the present invention contains a mixed granule of a composition containing a water retention agent, a swelling agent, a metal halide, water, an iron and an alkaline substance, wherein the alkaline substance contains at least one selected from the group consisting of hydroxides of alkali metals, hydroxides of alkaline earth metals and salts composed of a weak acid and a strong base. It is preferable that the mixed granule of the present invention contains the iron dispersed throughout the entire mixed granule. The oxygen scavenger composition of the present invention may be one composed only of the mixed granule, or may be one having a layer comprising a porous particle on an outside of the mixed granule.

The present inventors have found that an oxygen scavenger composition containing a mixed granule of a composition containing a water retention agent, a swelling agent, a metal halide, water, an iron and an alkaline substance, which oxygen scavenger composition is obtained by collectively mixing the water retention agent, the swelling agent, the metal halide, the water, the iron and the alkaline substance for granulation, is excellent in the oxygen absorption performance and little in hydrogen generation during oxygen absorption, and can absorb oxygen in a sealed container, without causing deformation or rupture of the container.

The detailed mechanism by which the advantageous effects of the present invention is attained is unclear, but it is conceivable that since by collectively mixing the water retention agent, the swelling agent, the metal halide, the water, the iron and the alkaline substance for granulation, the state that the iron powder is dispersed is held to prevent aggregation thereof and the oxidation thereof can efficiently be carried out, the oxygen absorption performance can be enhanced. Then, conventional oxygen scavengers are fabricated by mixing two agents of an oxygen absorbing agent composed of an iron powder, table salt, an activated carbon and the like, and a moisture imparting agent composed of diatomaceous earth, brine and the like. In such conventional-type oxygen scavengers, when in order to suppress hydrogen generation, an alkaline substance is mixed with the oxygen absorbing agent, since water is little on the surface of the oxygen absorbing agent, a concentrated alkaline water film is formed during the oxidative reaction to result in inhibiting the corrosion of the iron to end in making the oxidative reaction difficult. Even if an alkaline substance is mixed alternatively in the moisture imparting agent, since moisture is supplied from the moisture imparting agent to the oxygen absorbing agent by transpiration, the alkaline substance in the moisture imparting agent does not effectively act on suppression of the hydrogen generation. However, it is conceivable that as in the present invention, since a water retention agent, a swelling agent, a metal halide, water, an iron and an alkaline substance are collectively mixed for granulation, and the alkaline substance can be made present as an aqueous solution in a suitable concentration on the surface of the iron, the hydrogen generation during the oxygen absorption can be suppressed without greatly reducing the oxygen absorption performance.

### (Water retention agent)

The water retention agent contained in the oxygen scavenger composition of the present invention is a substance which is impregnated with water in the inside thereof and can hold water without oozing out.

The water retention agent is not especially limited as long as being one which can hold water, but there can be used generally available porous substances and highly water absorbing resins. Examples of the porous substances include diatomaceous earth, zeolite, sepiolite, cristobalite, porous glass, silica, activated clay, acid clay, activated carbon, vermiculite and wood meal. Examples of the highly water absorbing resins include polyacrylate salt-based resins, polysulfonate salt-based resins, polyacrylamide-based resins, polyvinyl alcohol-based resins, starch-based resins, cellulose-based resins and polyalginic acid-based resins. It is preferable that the water retention agent contains at least one selected from the group consisting of diatomaceous earth, silica and activated carbon. The above-mentioned water retention agent can be used singly in one kind, or as required, in combination of two or more kinds. These water retention agents are easily available as commercial products.

Among the above water retention agents, activated carbon is especially preferable because of having, in addition to the water retention function, a function of promoting the oxidative reaction of the iron. The kind of the activated carbon is not especially limited, and may be any of ones derived from wood, palm shells, coal and the like.

Further, it is preferable that the water retention agent contains, in addition to the activated carbon, at least one selected from the group consisting of diatomaceous earth and silica. By combining these, the water retention function can more be enhanced.

The property of the water retention agent is not especially limited, but from the viewpoint of handleability thereof during production of the oxygen scavenger, a water retention agent is suitably used which is a powdery one high in fluidity; and a water retention agent is more preferable whose particle shape is nearly spherical. Then, the average particle diameter of the water retention agent is, from the viewpoint of handleability during production of the oxygen scavenger, preferably 10 µm or more and 1,000 µm or less, and more preferably 100 µm or more and 500 µm or less. The particle of the water retention agent can be used regardless of a primary particle, an aggregated particle or a granule as long as the particle is one having a particle size in the above range. The water retention agent having a particle size in the above range can be used singly in one kind, or can also be used by mixing a plurality of kinds thereof having different particle sizes in an optional proportion.

The content of the water retention agent in the oxygen scavenger composition is not especially limited, but is, in the oxygen scavenger composition, preferably 10% by mass or more and 40% by mass or less, and more preferably 15% by mass or more and 30% by mass or less. Then, the content is, with respect to 100 parts by mass of water, preferably 20 parts by mass or more and 300 parts by mass or less, and more preferably 50 parts by mass or more and 200 parts by mass or less. When the content of the water retention agent is in the range, the oxygen scavenger composition can sufficiently hold water and there can be raised the amount of oxygen absorption per unit volume of the oxygen scavenger composition.

### (Swelling agent)

The swelling agent contained in the oxygen scavenger composition of the present invention is a substance which is swollen with moisture and has a binding function in order to hold the shape of a granule. It is preferable that the swelling agent is used in a substantially dry state or a half-swollen or swollen state in which a small amount of water or a required amount of water is absorbed.

The swelling agent is not especially limited as long as being a usually known swelling agent, and there can be used well-known swelling agents, binding agents tacky adhesives and binders which are used for food and the like.

Inorganic swelling agents include clay minerals such as sodium bentonite, calcium bentonite and sodium montmorillonite. Organic swelling agents include organic bentonite; natural substances such as defatted frozen-dried tofu, agar, starch, dextrin, gum arabic, gelatin and casein; semi-synthetic products such as crystalline cellulose, carboxymethylcellulose, carboxymethylcellulose sodium, carboxymethylcellulose calcium, hydroxyethylcellulose, lignin sulfonic acid and hydroxyethylated starch; and synthetic products such as water-insolubilized polyvinyl alcohol and polyvinyl methyl ether. The above-mentioned swelling agents can be used singly in one kind, or as required, in combination of two or more kinds. As these swelling agents, commercial products can be used.

Among the above swelling agents, preferable is at least one selected from the group consisting of clay minerals and cellulose-based semi-synthetic products.

The clay minerals are preferable because of being inexpensive and excellent also in the performance. The clay minerals are known also as inorganic soaps and have a function as a lubricant. The clay minerals swollen with water are known to exhibit a high thixotropy, and are preferable because of also exhibiting the binding property. Then, the cellulose-based semi-synthetic products are preferable because of exhibiting an excellent swelling property. Among these, preferable are bentonites such as calcium bentonite and sodium bentonite, and carboxymethylcellulose, carboxymethylcellulose sodium, carboxymethylcellulose calcium and the like because of being inexpensive and high in the binding power. Thus, it is more preferable that the swelling agent contained in the oxygen scavenger composition of the present invention contains at least one selected from the group consisting of carboxymethylcellulose calcium, carboxymethylcellulose sodium, calcium bentonite and sodium bentonite.

The average particle diameter of the swelling agent is, from the viewpoint of suppressing the generation of dusts and from the viewpoint of the binding function, preferably 0.001 µm or more and 10 µm or less, and more preferably 0.01 µm or more and 1.0 µm or less.

The content of the swelling agent in the oxygen scavenger composition is not especially limited, but is, in the oxygen scavenger composition, preferably 0.1% by mass or more and 20% by mass or less, and more preferably 1% by mass or more and 15% by mass or less. Then, the content is, with respect to 100 parts by mass of the iron, preferably 1 part by mass or more and 15 parts by mass or less, and more preferably 3 parts by mass or more and 10 parts by mass or less. When the content of the swelling agent is in the range, it is likely that the shape of the oxygen scavenger composition becomes easy to maintain; the proportion of the water retention agent does not become too low; the amount of moisture supplied to the iron does not decrease; and the amount of oxygen absorption becomes larger.

### (Metal halide)

The metal halide contained in the oxygen scavenger composition of the present invention is a substance which catalytically acts on the oxidative reaction of the iron to improve the activity of the iron. Further, the metal halide plays a role of preventing water contained in the oxygen scavenger composition from transpiring and being lost from the oxygen scavenger composition.

As the metal halide, any one can be used without particular limitation as long as being a usually known one.

A metal in the metal halide is not especially limited, but examples thereof include at least one selected from the group consisting of alkali metals, alkaline earth metals, copper, zinc, aluminum, tin, iron, cobalt and nickel. Among these, more preferable is at least one selected from the group consisting of lithium, potassium, sodium, magnesium, calcium, barium and iron. Then, a halide in the metal halide is not especially limited, but examples thereof include chlorides, bromides and iodides.

As the metal halide, from the viewpoint of handleability, safety and the like, preferable are calcium chloride, sodium chloride, calcium bromide, sodium bromide, calcium iodide and sodium iodide; and more preferable are calcium chloride and sodium chloride.

The metal halide can be used singly in one kind, or as required, in combination of two or more kinds. As these metal halides, commercial products can be used.

In the case of using, as a starting material, an aqueous solution of the metal halide, the concentration of the salt is preferably 5% by mass or more and 30% by mass or less, and more preferably 10% by mass or more and 20% by mass or less. The concentration of the salt at 5% by mass or more suppresses a decrease in the action of catalyzing the oxidation of the iron ; and the concentration of the salt at 30% by mass or less can suppress a decrease in the vapor pressure of moisture. It can suppress insufficient supply of moisture to the iron which decreases the amount of oxygen absorption. Then, in the case where the alkaline substance described later is soluble in water, it is preferable to use, as starting materials, an aqueous solution containing the metal halide and the alkaline substance. It is preferable that the concentration of the metal halide in the aqueous solution containing the metal halide and the alkaline substance is in the above-mentioned range.

The content of the metal halide in the oxygen scavenger composition is not especially limited, but is, in the oxygen scavenger composition, preferably 0.5% by mass or more and 15% by mass or less, and more preferably 1% by mass or more and 10% by mass or less. Further, the content is, with respect to 100 parts by mass of the iron, preferably 0.5 part by mass or more and 20 parts by mass or less, and more preferably 2 parts by mass or more and 10 parts by mass or less.

### (Water)

From the viewpoint that the iron-based oxygen scavenger exhibits the oxygen absorption performance, the oxygen scavenger composition of the present invention contains water. The content of water in the oxygen scavenger composition is not especially limited, but is, in the oxygen scavenger composition, preferably 10% by mass or more and 40% by mass or less, and more preferably 15% by mass or more and 30% by mass or less. Further from the viewpoint of the oxygen absorption performance, the content is, with respect to 100 parts by mass of the iron, preferably 20 parts by mass or more and 50 parts by mass or less, and more preferably 25 parts by mass or more and 40 parts by mass or less.

### (Iron)

The shape of the iron contained in the oxygen scavenger composition of the present invention is not especially limited, but is, from the viewpoint of the oxygen absorption performance, the easy availability and the easy handleability, preferably an iron powder. The iron powder is not especially limited as long as being one in which the surface of the iron is exposed, and there can suitably be used reduced iron powder, electrolytic iron powder, atomized iron powder and the like. Further, pulverized products and cutting chips of cast iron or the like can also be used.

The iron powder can be used singly in one kind, or as required, in combination of two or more kinds. These iron powders are easily available also as commercial products.

Further, an iron powder coated with a metal halide on the surface thereof can also be used. The iron powder coated with the metal halide can be prepared by mixing an iron powder with an aqueous solution of the metal halide, and thereafter, drying the resultant mixture to remove moisture. The metal halide for coating the iron powder is preferably the metal halide described above.

Further, an iron powder coated with an alkaline substance described later on the surface thereof can also be used. The iron powder coated with the alkaline substance can be prepared by mixing an iron powder with an aqueous solution of the alkaline substance, and thereafter, drying the resultant mixture to remove moisture. The alkaline substance for coating the iron powder is preferably an alkaline substance described later. Since as described later, by using an aqueous solution containing the metal halide and the alkaline substance, there can also be used an iron powder coated with both of the metal halide and the alkaline substance on the surface thereof, the case is preferable.

The average particle diameter of the iron powder is, from the viewpoint of making good the contact with oxygen, preferably 1,000 µm or less, more preferably 500 µm or less, and still more preferably 200 µm or less, and is, from the viewpoint of suppressing the generation of dusts, preferably 1 µm or more, more preferably 10 µm or more, and still more preferably 20 µm or more. Here, the particle diameter mentioned herein indicates a particle diameter measured from weight fractions by sizes of sieve openings after vibration for 5 min by using standard sieves according to ISO 3310-1:2000 (corresponding to JIS Z8801-1:2006).

Then, the specific surface area of the iron powder is, from the viewpoint of the oxygen absorption performance, preferably 0.05 m²/g or more, and more preferably 0.1 m²/g or more. The specific surface area of the iron powder can be measured by a BET multipoint method.

The oxygen scavenger composition of the present invention contains an iron as a main agent. The content of the iron in the oxygen scavenger composition is, in the oxygen scavenger composition, preferably 40% by mass or more and 90% by mass or less, more preferably 45% by mass or more and 80% by mass or less, and especially preferably 50% by mass or more and 70% by mass or less.

### (Alkaline substance)

The oxygen scavenger composition of the present invention contains an alkaline substance containing at least one selected from the group consisting of hydroxides of alkali metals, hydroxides of alkaline earth metals and salts composed of a weak acid and a strong base.

It is conceivable that the alkaline substance contained in the oxygen scavenger composition of the present invention contributes to the suppression of the hydrogen generation during the oxygen absorption.

The alkaline substance contains at least one selected from the group consisting of hydroxides of alkali metals, hydroxides of alkaline earth metals and salts composed of a weak acid and a strong base, but it is preferable that the alkaline substance contains at least one selected from the group consisting of hydroxides of alkali metals and hydroxides of alkaline earth metals. Then, it is more preferable that the alkaline substance contains at least one selected from the group consisting of hydroxides of alkaline earth metals, and salts composed of a weak acid and a strong base; and it is still more preferable that the alkaline substance contains at least one selected from the group consisting of hydroxides of alkali metals and hydroxides of alkaline earth metals.

Among these, from the viewpoint that the solubility in water is relatively high and the concentration of an alkali aqueous solution can be adjusted optionally, the hydroxides of alkali metals are further still more preferable; and from the viewpoint that the solubility in water is relatively low and even in the case of the addition in a large amount, the concentration of the alkali aqueous solution does not become excessively high, the hydroxides of alkaline earth metals are further still more preferable.

The hydroxides of alkali metals include sodium hydroxide, potassium hydroxide and lithium hydroxide, and sodium hydroxide and potassium hydroxide are preferable.

The hydroxides of alkaline earth metals include calcium hydroxide, strontium hydroxide, magnesium hydroxide and barium hydroxide; calcium hydroxide, strontium hydroxide and magnesium hydroxide are preferable; and calcium hydroxide is more preferable; and it is more preferable that the alkaline substance contains calcium hydroxide, and it is still more preferable that the alkaline substance is calcium hydroxide.

The salts composed of a weak acid and a strong base include phosphate salts, citrate salts, carbonate salts and hydrogencarbonate salts; and among these, phosphate salts and citrate salts are preferable. The salts composed of a weak acid and a strong base specifically include trisodium phosphate, trisodium citrate, sodium hydrogencarbonate and sodium carbonate; and trisodium phosphate and trisodium citrate are preferable.

The solubility at 25°C of the alkaline substance in water is preferably 0.1 to 60% by mass, more preferably 0.1 to 10% by mass, still more preferably 0.1 to 1% by mass, and further still more preferably 0.1 to 0.5% by mass. Then, the solubility thereof to 100 g of water at 25°C is preferably 0.1 to 150 g, more preferably 0.1 to 11 g, still more preferably 0.1 to 1 g and further still more preferably 0.1 to 0.5 g. Due to that the solubility of the alkaline substance is in the above range, since the oxygen absorption is not inhibited by the oxidation of the iron; a high oxygen absorption performance originated from the iron-based oxygen scavenger can be maintained; and the generation of hydrogen can also be suppressed, the case is preferable.

Here, the solubility of the alkaline substance may be known by referring to a value described in MSDS of the corresponding substance; and in the case where there is no MSDS, the solubility can be measured by a temperature change method (method No. 2) or an evaporation method.

The alkaline substance can be used singly in one kind, or as required, in combination of two or more kinds. Then, as these alkaline substances, commercial products can be used.

In the case of using, as a starting material, an aqueous solution of the alkaline substance, the concentration thereof is preferably 0.1% by mass or more and 20% by mass or less, more preferably 0.5% by mass or more and 10% by mass or less, and still more preferably 1% by mass or more and 5% by mass or less. Due to that the concentration of the alkaline substance is in the above range, while the oxygen absorption performance is maintained, the hydrogen generation can be suppressed. Then an aqueous solution containing both of the above-mentioned metal halide and alkaline substance may be used as starting materials. It is preferable that the concentration of the alkaline substance in the aqueous solution containing the metal halide and the alkaline substance is also in the above range.

The content of the alkaline substance in the oxygen scavenger composition is not especially limited, but is, in the oxygen scavenger composition, preferably 0.1% by mass or more and 5% by mass or less, more preferably 0.2% by mass or more and 3% by mass or less, and still more preferably 0.3% by mass or more and 1.5% by mass or less. Further, the content is, with respect to 100 parts by mass of the iron, preferably 0.2 to 10 parts by mass, more preferably 0.3 to 5 parts by mass and still more preferably 0.5 to 3 parts by mass.

### <Mixed granule>

The oxygen scavenger composition of the present invention contains a mixed granule of a composition containing the water retention agent, the swelling agent, the metal halide, water, the iron and the alkaline substance. Here, in the present invention, "granulation" refers to an operation in which a starting material powder composed of a single or multiple components is mixed by using a binding agent and the like to reduce the presence ratio of fine powder as compared with the state of the starting material powder, to be thereby processed into larger particles than the starting material powder. A "granule" refers to a powdery/granular material obtained by the granulation operation wherein the presence ratio of fine powder is reduced as compared with the state of the starting material powder and the starting material powder is processed into larger particles than the starting material powder.

Here, the mixed granule in the present invention is not a pressure-molded product. That is, the granule contained in the oxygen scavenger composition of the present invention can be produced simply in a low cost only by mixing the starting material powder without carrying out pressure-molding. Further due to that the mixed granule is not a pressure-molded product, it is conceivable that since spaces are present in the mixed granule and contacting of oxygen with the iron becomes easy, the case can contribute to improvement of the oxygen absorption performance.

Further, a "mixed granule of a composition containing a water retention agent, a swelling agent, a metal halide, water, an iron and an alkaline substance" refers to one in which the composition constituting the granule contains the water retention agent, the swelling agent, the metal halide, water, the iron and the alkaline substance, and the granule is formed in the state that these components are mixed, and does not include such a powdery/granular material that part of the components are localized as layers to form layer structures.

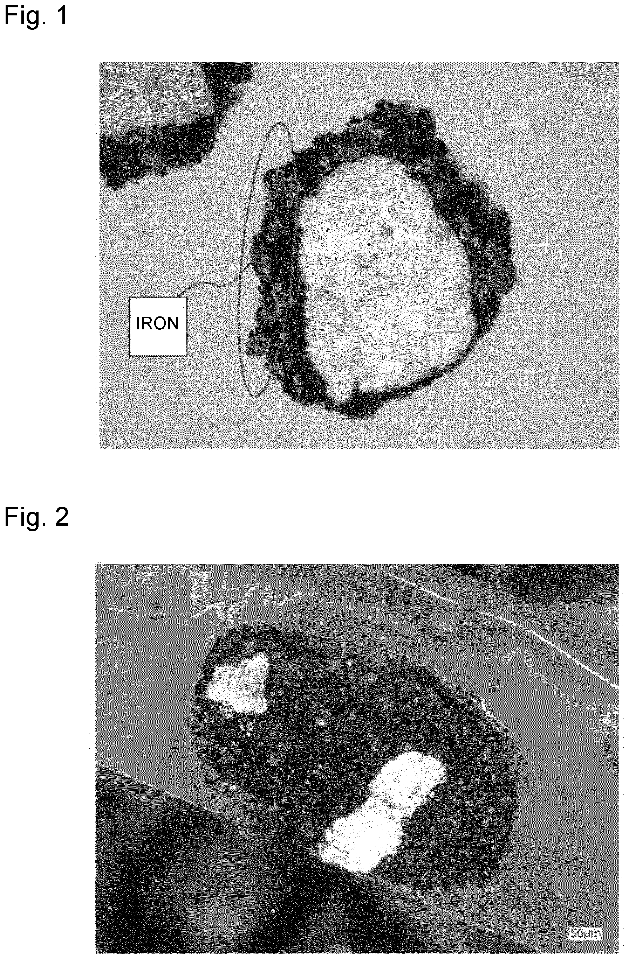

It is especially preferable that the mixed granule in the present invention contains the iron dispersed throughout the entire mixed granule. In the above PTL2, since a water retention agent and a swelling agent are added under mixing in an aqueous solution of a metal halide to prepare a powdery/granular material being a starting material of an α layer, and thereafter, an iron powder is added in the powdery/granular material to deposit the iron powder on the outer side of the α layer to prepare an (α layer/β layer) powdery/granular material, the iron powder is localized in the region of the outer side of the powdery/granular material (Fig. 1). By contrast, as described later, a method for producing the oxygen scavenger composition of the present invention is a method including a step of collectively mixing a water retention agent, a swelling agent, a metal halide, water, an iron and an alkaline substance to granulate the mixture, and in the granule obtained by the method, the iron is dispersed throughout the entire granule (Fig. 2).

Here, Fig. 1 is a cross-sectional photograph of an (α layer/β layer) powdery/granular material fabricated by a method described in Example 1 of PTL2; and Fig. 2 is a cross-sectional photograph of a mixed granule fabricated in Example 1 described later. Samples for observation were fabricated by embedding each particle in a resin and cutting a central region of the particle by using a "Quick Trimming Tool T-111", manufactured by Micro Support Co., Ltd., to cut out a particle cross section for observation. The cross section observation was carried out by using an optical microscope ("VHX-2000", manufactured by Keyence Corp., magnification: 50 times).

It is clear that whereas in the particle shown in Fig. 1, iron (portions of gray) is localized on the outer side, the particle shown in Fig. 2, iron (portions of gray) is present sparsely throughout the entire.

The content of the mixed granule in the oxygen scavenger composition of the present invention is preferably 90% by mass or more, more preferably 95% by mass or more, still more preferably 98% by mass or more, and further still more preferably substantially 100% by mass.

### (Porous particle)

The oxygen scavenger composition of the present invention may be one composed only of the mixed granule, but it is preferable that the oxygen scavenger composition has a layer containing a porous particle on the outer side of the mixed granule.

The porous particle that may be used in the present invention is not especially limited as long as being a particle having a porous shape. The term porous as used herein refers to the state of having a large number of such pores as can be observed by electron microscopy both on the surface and in the inside. As the porous particle, a porous substance used for the above-mentioned water retention agent can suitably be used, but silicas are preferable. The silicas means ones having silicon dioxide (SiO₂) as a main component. By using the silicas, the bulk density of the powdery/granular material obtained increases and the amount of oxygen absorption becomes large.

The silicas are not especially limited, but examples thereof include surface-treated silica, hydrophobic silica, wet silica, dry silica, silica gel, diatomaceous earth, acid clay, activated clay, perlite, kaolin, talc and bentonite. The above-mentioned porous particle can be used singly in one kind, or as required, in combination of two or more kinds. Then, these porous particles are easily available as commercial products.

In the case where the oxygen scavenger composition of the present invention has the layer containing the porous particle, the content of the porous particle in the layer containing the porous particle is preferably 30% by mass or more, more preferably 50% by mass or more, and still more preferably 80% by mass or more.

In the case where the oxygen scavenger composition of the present invention has the layer containing the porous particle, the content of the porous particle in the oxygen scavenger composition is preferably 0.1% by mass or more and 5% by mass or less, and more preferably 0.5% by mass or more and 3% by mass or less. Due to that the content of the porous particle is in such a range, it is likely that the bulk density of the oxygen scavenger composition increases and the amount of oxygen absorption becomes high, and the fluidity of the oxygen scavenger composition is improved and the handleability during production of an oxygen scavenger package can be improved.

### <Shape of the oxygen scavenger composition>

The shape of the oxygen scavenger composition of the present invention is not especially limited, but examples thereof include a spherical shape, a nearly spherical shape, an ellipsoidal shape and a columnar shape; and a spherical shape and a nearly spherical shape are preferable and a spherical shape is more preferable, because it is likely that these shapes are better in the filling property and are higher in the bulk density.

The average particle diameter of the oxygen scavenger composition of the present invention is preferably 0.3 mm or more and 5.0 mm or less, and more preferably 0.5 mm or more and 2.0 mm or less. Due to that the above average particle diameter is 0.3 mm or more, it is likely that there is suppressed the oxygen scavenger composition depositing electrostatically or otherwise on a powdery/granular material-contact portion of a packaging machine during filling and packaging; and due to that the above average particle diameter is 5.0 mm or less, it is likely that there are suppressed gaps among the powdery/granular materials becoming too large and the amount of oxygen absorption per unit volume decreasing. In order to obtain the oxygen scavenger composition having an average particle diameter in the above range, the case may be attained, for example, by carrying out sieving by using sieves of 0.3 mm and 5 mm in opening. The average particle diameter can be measured, for example, by a commercially available laser diffraction scattering type particle size distribution analyzer ("LA-960", manufactured by HORIBA Ltd.).

The bulk density of the oxygen scavenger composition of the present invention is not especially limited, but is preferably 1.0 g/mL or more, more preferably 1.3 g/mL or more, and still more preferably 1.5 g/mL or more. Due to that the bulk density is 1.0 g/mL or more, the amount of oxygen absorption per unit volume is likely to be higher. The bulk density is, practically, 2.5 g/mL or less. In order to obtain the oxygen scavenger composition having a bulk density in the above range, one having a target bulk density may be selected by a gravity separation device ("High Speed Aspirator" or the like, manufactured by Tokyo Seifunki Seisakusho KK). The bulk density can be measured according to JIS Z8901:2006.

### [Method for producing the oxygen scavenger composition]

It is preferable that a method for producing the oxygen scavenger composition of the present invention is a method (production method of the present invention) including a step of collectively mixing a water retention agent, a swelling agent, a metal halide, water, an iron and an alkaline substance for granulation. According to the production method of the present invention, a mixed granule is prepared by mixing the water retention agent, the swelling agent, the metal halide, water, the iron and the alkaline substance until these are homogeneously dispersed, and the oxygen scavenger composition can efficiently be prepared. In the above PTL2, a water retention agent and a swelling agent are added under mixing in an aqueous solution of a metal halide to prepare a powdery/granular material being a starting material of an α layer, and thereafter, an iron powder is added in the powdery/granular material to deposit the iron powder on the outer side of the α layer to prepare an (α layer/β layer) powdery/granular material, and further, a hydrophobic silica is added in the (α layer/β layer) powdery/granular material to deposit the hydrophobic silica on the outer side of the β layer to thereby prepare an (α layer/β layer/γ layer) powdery/granular material. That is, the production method needs two-stage steps in which after the powdery/granular material being a starting material of the α layer is prepared, the iron powder is deposited on the outer side of the α layer. By contrast, in the production method of the present invention, since the oxygen scavenger composition can be produced by a one-stage step in which the water retention agent, the swelling agent, the metal halide, water, the iron and the alkaline substance are collectively mixed for granulation, the oxygen scavenger composition can be produced more efficiently than by the method of PTL2. Further according to the production method of the present invention, the mixed granule contained in the oxygen scavenger composition of the present invention can be produced simply and in a low cost only by mixing the starting material powder without carrying out pressure-molding.

A mixing apparatus is not especially limited, but as specific examples thereof, there can be used a Nauta mixer (manufactured by Hosokawa Micron Corp.), a conical mixer (manufactured by Ono Kagaku Kikai KK), a vertical granulator (manufactured by Powrex Corp.), a high-speed mixer (manufactured by Earthtechnica Co., Ltd.) and a granulator (manufactured by Akirakiko Co., Ltd.).

A method for producing an oxygen scavenger composition having a layer containing the porous particle involves adding and mixing the porous particle such as a hydrophobic silica in the mixed granule to form a layer containing the porous particle on the outer side of the mixed granule to thereby prepare the oxygen scavenger composition.

Since the iron being a main agent of the oxygen scavenger reacts with oxygen, the reaction with oxygen slowly progresses even in the case where water, the metal halide and the like are not present. Hence, it is preferable that the mixing is carried out in an inert atmosphere (in the case of using a substantially closed system, the atmosphere is usually set to a reductive atmosphere containing no oxygen in the system), and a heat removal means is suitably adopted.

### [Oxygen scavenger package]

The oxygen scavenger package of the present invention contains the above-mentioned oxygen scavenger composition and an air-permeable packaging material accommodating the oxygen scavenger composition.

### (Packaging material)

The packaging material includes one in which two sheets of air-permeable packaging material are laminated to make a bag form, one in which one sheet of air-permeable packaging material and one sheet of non-air-permeable packaging material are laminated to make a bag form, and one in which one sheet of air-permeable packaging material is folded and edges except the folded portion are sealed to make a bag form.

Here, in the case where the air-permeable packaging material and the non-air-permeable packaging material are of a square shape, examples of the packaging material include one in which two sheets of air-permeable packaging material are superposed and four sides are heat sealed to make a bag form, one in which one sheet of air-permeable packaging material and one sheet of non-air-permeable packaging material are superposed and four sides are heat sealed to make a bag form, and one in which one sheet of air-permeable packaging material is folded and three sides except the folded portion are heat sealed to make a bag form. Further, the packaging material may also be one in which the air-permeable packaging material is made into a cylindrical shape and both ends and the trunk of the cylindrical body are heat sealed to make a bag form.

### (Air-permeable packaging material)

As the air-permeable packaging material, there are selected packaging materials which oxygen and carbon dioxide can permeate. Among these, there is suitably used one which has an air permeation resistance by a Gurley type testing method of 600 s or less, more preferably 90 s or less. Here, the air permeation resistance refers to a value measured by the method of JIS P8117(1998). More specifically, the air permeation resistance refers to the time taken for 100 mL of air to permeate the air-permeable packaging material by using a Gurley type Densometer (manufactured by Toyo Seiki Seisaku-sho Ltd.).

As the air-permeable packaging material, there are used ones in which the air permeability is imparted to paper, nonwoven fabric and besides, a plastic film. As the plastic film, there can be used, for example, a laminated film and the like in which a film of polyethylene terephthalate, polyamide, polypropylene, polycarbonate or the like and a film, as a seal layer, of polyethylene, an ionomer, polybutadiene, an ethylene-acrylic acid copolymer, an ethylene-methacrylic acid copolymer, an ethylene-vinyl acetate copolymer or the like, are laminated and adhered. Further, laminated products of these can also be used as the air-permeable packaging material.

A method of imparting the air permeability can adopt, in addition to piercing machining using cold needles or hot needles, various types of methods. In the case where the air permeability is provided by piercing machining, the air permeability can optionally be regulated by the diameter, the number, the material and the like of perforations to be pierced.

It is preferable that the thickness of the laminated film is 50 to 300 µm: being 60 to 250 µm is especially preferable. In this case, as compared with the case where the thickness is out of the above range, the packaging material can be made one which holds the strength and is excellent in the heat sealability and the packaging suitability.

### Examples

Hereinafter, the present embodiment will be described in detail by way of Examples and Comparative Examples, but the present embodiment may suitably be changed as long as the operation and effect of the present invention are attained. Here, "parts" in Examples and Comparative Examples, unless otherwise specified, means parts by mass.

### (Production of oxygen scavenger compositions and oxygen scavenger packages)

### Example 1

1,240 parts of a diatomaceous earth ("CG-2U", manufactured by Isolite Insulating Products Co., Ltd., average particle diameter: 0.44 mm), 1,120 parts of an activated carbon ("S-W50", manufactured by Futamura Chemical Co., Ltd., average particle diameter: 10 µm), 225 parts of a calcium bentonite ("Neokunibond", manufactured by Kunimine Industries Co., Ltd.), 20 parts of a carboxymethylcellulose sodium ("F350HC-4", manufactured by Nippon Paper Chemical Co., Ltd.), and a sodium chloride sodium hydroxide aqueous solution in which 410 parts of sodium chloride and 63 parts of sodium hydroxide were dissolved in 2,000 parts of water, and 6,000 parts of an iron powder (average particle diameter: 100 µm, specific surface area: 0.104 m²/g) were added in a high-speed mixer ("FS25", manufactured by Earthtechnica Co., Ltd.), and mixed at 240 rpm for 3 min in a nitrogen gas atmosphere, to thereby obtain a mixed granule (average particle diameter: 0.78 mm). 110 parts of a surface-treated silica ("SS-30P", manufactured by Tosoh Silica Corp., average particle diameter: 1.2 µm) was further added, and mixed at 240 rpm for 30 s, to thereby obtain an oxygen scavenger composition (average particle diameter: 0.87 mm, bulk density: 1.47 g/mL) having a porous particle layer formed on the outer side of the mixed granule.

Then, 0.8 g of the oxygen scavenger composition was filled in an air-permeable packaging material-made small bag (constitution: PET/nonwoven fabric/opened polyethylene, dimensions: 50 mm × 60 mm, thickness: 140 µm) to thereby obtain a small bag-shape oxygen scavenger package 1-1.

Separately, 30 g of the oxygen scavenger composition was filled in an air-permeable packaging material-made small bag (constitution: nonwoven fabric/opened polyethylene, dimensions: 75 mm × 100 mm) to thereby obtain a small bag-shape oxygen scavenger package 1-2.

Then, the oxygen scavenger composition, the oxygen scavenger package 1-1 and the oxygen scavenger package 1-2 obtained in the present Example, until these were used for tests, were stored by putting these in respective barrier bags low in the oxygen permeability and thermally fusing the mouths of the bags so these as not to react with oxygen in the air. Further, oxygen scavenger compositions and oxygen scavenger packages of the two kinds obtained in Examples 2 to 4 and Comparative Examples 1 to 4 were stored similarly until these were used for tests.

### Examples 2 to 4

Oxygen scavenger compositions being mixed granule, oxygen scavenger packages containing 0.8 g of the respective oxygen scavenger compositions, 2-1, 3-1 and 4-1, and oxygen scavenger packages containing 30 g of the respective oxygen scavenger compositions, 2-2, 3-2 and 4-2 were obtained as in Example 1, except for using 63 parts of respective alkaline substances indicated in Table 1 in place of 63 parts of sodium hydroxide (NaOH) in Example 1.

Here, in Table 1, any of potassium hydroxide (KOH), calcium hydroxide (Ca(OH)₂) and strontium hydroxide (Sr(OH)₂) used was a reagent manufactured by Fujifilm Wako Pure Chemical Corp. Further in Table 1, the solubilities of the each alkaline substance in water at 25°C were a value (g/100 g of water) described in MSDS of the each reagent and a value (% by mass) calculated therefrom.

### Comparative Example 1

1.0 g of sodium chloride (manufactured by Fujifilm Wako Pure Chemical Corp.) and 1.0 g of sodium hydroxide were dissolved in 10 g of water to thereby prepare an aqueous solution.

0.4 g of an activated carbon (manufactured by Futamura Chemical Co., Ltd.) and the aqueous solution prepared in the above were added, under mixing, to 100 g of an iron powder (average particle diameter: 100 µm) and made into a homogeneous state. Thereafter, the resultant was dried to thereby obtain a surface-coated iron powder (A). Then, an aqueous solution in which 14.2 g of sodium chloride (manufactured by Fujifilm Wako Pure Chemical Corp.) was dissolved in 80.2 g of water was dropped, under mixing, to 100 g of a diatomaceous earth ("CG-1C", manufactured by Isolite Insulating Products Co., Ltd.) and homogeneously impregnated therein to thereby obtain 200 g of a moisture imparting material (B).

61.5 parts by mass of the iron powder (A) and 38.5 parts by mass of the moisture imparting material (B) were mixed to thereby obtain an oxygen scavenger composition being a powder mixed material. By using the obtained oxygen scavenger composition, an oxygen scavenger package containing 0.8 g of the oxygen scavenger composition, 5-1, and an oxygen scavenger package containing 30 g of the oxygen scavenger composition, 5-2, were obtained as in Example 1.

### Comparative Example 2

An oxygen scavenger composition being a powder mixed material, an oxygen scavenger package containing 0.8 g of the oxygen scavenger composition, 6-1, and an oxygen scavenger package containing 30 g of the oxygen scavenger composition, 6-2, were obtained as in Comparative Example 1, except for using 1.0 g of calcium hydroxide in place of 1.0 g of sodium hydroxide.

### Comparative Example 3

An oxygen scavenger composition being a powder mixed material, an oxygen scavenger package containing 0.8 g of the oxygen scavenger composition, 7-1, and an oxygen scavenger package containing 30 g of the oxygen scavenger composition, 7-2, were obtained as in Comparative Example 1, except for not using 1.0 g of sodium hydroxide and preparing an aqueous solution in which 1.0 g of sodium chloride (manufactured by Fujifilm Wako Pure Chemical Corp.) alone was dissolved in 10 g of water.

### Comparative Example 4

An oxygen scavenger composition being a powder mixed material, an oxygen scavenger package containing 0.8 g of the oxygen scavenger composition, 8-1, and an oxygen scavenger package containing 30 g of the oxygen scavenger composition, 8-2, were obtained as in Example 1, except for not using 63 parts of sodium hydroxide and preparing a sodium chloride aqueous solution in which 410 parts of sodium chloride alone was dissolved in 2,000 parts of water.

### (Average particle diameter of the starting materials, the mixed granules and the oxygen scavenger compositions)

The average particle diameter of the starting materials, the mixed granules and the oxygen scavenger compositions was measured by a laser diffraction scattering type particle size distribution analyzer ("LA-960", manufactured by HORIBA Ltd.).

### (Specific surface area of the iron powder)

The specific surface area (unit: m²/g) of the iron powder was measured based on a BET multipoint method according to JIS Z8830:2013.

### (Bulk density of the oxygen scavenger compositions)

The bulk density (unit: g/mL) of the oxygen scavenger compositions was measured according to JIS Z8901:2006.

### (Amount of oxygen absorption by the oxygen scavenger compositions)

Each package of the oxygen scavenger packages containing 0.8 g of the respective oxygen scavenger compositions, 1-1 to 8-1, was accommodated in a gas barrier bag (dimensions: 250 mm × 400 mm) composed of a polyvinylidene chloride-coated stretched nylon/polyethylene together with 3,000 mL of air, and hermetically sealed. The gas barrier bag was allowed to stand still at 25°C for 1 day, and thereafter, the oxygen concentration in the gas barrier bag was measured by a galvanic-type oxygen concentration meter (RO-102 type, manufactured by Iijima Electronics Corp.); and from a difference between the measured oxygen concentration and an oxygen concentration before the standing at 25°C for 1 day, there was calculated the amount of oxygen which the oxygen scavenger composition absorbed per 1 g of the iron powder.

The results of the calculated amounts of oxygen absorption per 1 g of the iron powder are shown in Table 1. The higher the value of the amount of oxygen absorption, the larger amount of oxygen the oxygen scavenger composition in the smaller amount could absorb, which is favorable.

### (Amount of hydrogen generation by the oxygen scavenger compositions)

Each package of the oxygen scavenger packages containing 30 g of the respective oxygen scavenger compositions, 1-2 to 8-2, was accommodated in a gas barrier bag (constitution: nylon/aluminum foil/polyethylene, dimensions: 175 mm × 250 mm) together with 25 mL of air, and hermetically sealed. The gas barrier bag was allowed to stand still at 35°C for 3 days, and thereafter, the hydrogen concentration in the gas barrier bag was measured by a gas chromatography. The amount of hydrogen generation per 1 g of the iron powder was calculated from the measured hydrogen concentration.

The results of the calculated amounts of hydrogen generation per 1 g of the iron powder are shown in Table 1.

### (Amount of hydrogen generation per 100 mL of the amount of oxygen absorption by the oxygen scavenger compositions)

From the results of the amount of oxygen absorption per 1 g of the iron powder, as calculated by the above method and the amount of hydrogen generation per 1 g of the iron powder, as calculated by the above method, there was calculated the amount of hydrogen generation per 100 mL of the amount of oxygen absorption, in which the amount of hydrogen generation is an amount of hydrogen generated when each of the oxygen scavenger compositions obtained in Examples and Comparative Examples absorbed 100 mL of oxygen.

The smaller the amount of hydrogen generation per 100 mL of the amount of oxygen absorption, the less the generation of hydrogen relative to the amount of oxygen absorption necessary in practical use, which is favorable.

**Table 1**

| | State of bulk powder | Alkaline substanc e | Solubility at 25°C in water | | Amount of hydrogen generation per 1 g of iron powder | Amount of oxygen absorption per 1 g of iron powder | Amount of hydrogen generation per 100 mL of the amount of oxygen absorption |
|---|---|---|---|---|---|---|---|
| | | | g/100 g of water | % by mass | mL | mL | mL |
| Comparative Example 3 | Mixture of iron powder (A) and moisture imparting material (B) | none | - | | 0.0195 | 115.1 | 0.0169 |
| Comparative Example 1 | | NaOH | 113.7 | 53.21 | 0.0004 | 27.6 | 0.0014 |
| Comparative Example 2 | | Ca(OH)₂ | 0.17 | 0.17 | 0.0008 | 83.3 | 0.0010 |
| Comparative Example 4 | Mixed granule | none | - | | 0.0104 | 318.5 | 0.0033 |
| Example 1 | | NaOH | 113.7 | 53.21 | 0.0010 | 217.1 | 0.0005 |
| Example 2 | | KOH | 110 | 52.4 | 0.0008 | 245.4 | 0.0003 |
| Example 3 | | Ca(OH)₂ | 0.17 | 0.17 | 0.0006 | 306.6 | 0.0002 |
| Example 4 | | Sr(OH)₂ | 1 | 1 | 0.0011 | 315.9 | 0.0003 |

As is clear from the results of Table 1, in the case of an oxygen scavenger composition using, as a bulk powder, a mixture of a conventional-type oxygen scavenger (iron powder (A)) and moisture imparting agent (moisture imparting material (B)), the addition of an alkaline substance (Comparative Examples 1 and 2), as compared with no addition thereof (Comparative Example 3), though suppressing the generation of hydrogen, remarkably reduced the oxygen absorption performance.

By contrast, it is clear that in the cases of the oxygen scavenger compositions of Examples, by making a bulk powder into a mixed g granule and adding an alkaline substance thereto (Examples 1 to 4), a very excellent oxygen absorption performance peculiar to a mixed granule could be exhibited; and as compared with the case of no addition of an alkaline substance (Comparative Example 4), without greatly reducing the oxygen absorption performance, the generation of hydrogen could be greatly reduced.

Further, it is also clear that according to production methods of Examples, the collective mixing and granulation could efficiently provide the excellent oxygen scavenger compositions as described above.

## Claims

1. An oxygen scavenger composition comprising a mixed granule of a composition comprising a water retention agent, a swelling agent, a metal halide, water, an iron and an alkaline substance, wherein the alkaline substance comprises at least one selected from the group consisting of hydroxides of alkali metals, hydroxides of alkaline earth metals and salts composed of a weak acid and a strong base.

2. The oxygen scavenger composition according to claim 1, wherein a content of the alkaline substance is 0.2 to 10 parts by mass with respect to 100 parts by mass of the iron.

3. The oxygen scavenger composition according to claim 1 or 2, wherein a solubility of the alkaline substance in water at 25°C is 0.1 to 60% by mass.

4. The oxygen scavenger composition according to any one of claims 1 to 3, wherein the alkaline substance comprises at least one selected from the group consisting of hydroxides of alkali metals and hydroxides of alkaline earth metals.

5. The oxygen scavenger composition according to any one of claims 1 to 4, wherein the alkaline substance comprises calcium hydroxide.

6. The oxygen scavenger composition according to any one of claims 1 to 5, which has a layer containing a porous particle on an outside of the mixed granule.

7. The oxygen scavenger composition according to any one of claims 1 to 6, wherein the water retention agent comprises at least one selected from the group consisting of diatomaceous earth, silica and activated carbon.

8. The oxygen scavenger composition according to any one of claims 1 to 7, wherein the swelling agent comprises at least one selected from the group consisting of carboxymethylcellulose calcium, carboxymethylcellulose sodium, calcium bentonite and sodium bentonite.

9. The oxygen scavenger composition according to any one of claims 1 to 8, wherein the mixed granule is not a pressure-molded product.

10. The oxygen scavenger composition according to any one of claims 1 to 9, wherein the iron is dispersed throughout the entire mixed granule.

11. A method for producing an oxygen scavenger composition according to any one of claims 1 to 10, the method comprising a step of collectively mixing a water retention agent, a swelling agent, a metal halide, water, an iron and an alkaline substance for granulation.

12. An oxygen scavenger package comprising an oxygen scavenger composition according to any one of claims 1 to 10 and an air-permeable packaging material accommodating the oxygen scavenger composition.
